# EUROPÄISCHE PATENTSCHRIFT

(11) **EP 3 122 981 B1**
(45) Veröffentlichungstag und Bekanntmachung des Hinweises auf die Patenterteilung: **28.11.2018**
(21) Anmeldenummer: 15713433.9
(22) Anmeldetag: 25.03.2015
(51) Int. Cl.: E06B 7/21

(54) **DICHTUNGSVORRICHTUNG UND BEFESTIGUNGSMITTEL**
SEALING DEVICE AND MEANS FOR FIXATION
DISPOSITIF D'ÉTANCHÉITÉ ET MOYEN POUR FIXATION

(30) Priorität: 26.03.2014 EP 14161656
(43) Veröffentlichungstag der Anmeldung: 01.02.2017
(73) Patentinhaber: Planet GDZ AG, 8317 Tagelswangen (CH)
(72) Erfinder: DINTHEER, Andreas, 8308 Illnau (CH)
(74) Vertreter: Clerc, Natalia
(86) Internationale Anmeldenummer: PCT/EP2015/056479
(87) Internationale Veröffentlichungsnummer: WO 2015/144794

(56) Entgegenhaltungen:
- EP-A1- 2 305 938
- EP-A2- 1 748 142
- EP-A2- 1 772 586
- DE-U1-202010 010 057
- US-A- 2 066 188

## Beschreibung

### TECHNISCHES GEBIET

Die vorliegende Erfindung betrifft eine Dichtungsvorrichtung für eine Tür oder ein Fenster gemäss Oberbegriff des Patentanspruchs 1 sowie ein Befestigungsmittel einer derartigen Absenkdichtung, siehe Anspruch 21.

### STAND DER TECHNIK

Manuell oder automatisch betätigbare Absenkdichtungen für Türen oder Fenster werden üblicherweise in einer Nut eines Tür- oder Fensterflügels oder an einer Stirnseite angeordnet und mit einem Befestigungswinkel angeschraubt. Dies ist beispielsweise in EP 1 122 394 dargestellt. US 2 066 188 offenbart eine Absenkdichtung mit einer Befestigungsplatte.

Ferner ist aus EP 1 772 586 ein Befestigungswinkel bekannt, welcher die maschinelle Montage verbessern soll. Dieser Befestigungswinkel ist in der Gehäuseschiene unverlierbar angeordnet.

EP 1 748 142 offenbart einen Haltewinkel mit einem dahinter angeordneten Magneten, wobei eine Befestigungsschraube sowohl den Haltewinkel wie auch den Magneten durchsetzt.

EP 2 305 938 zeigt ein Halteelement mit einer versenkbaren Schraube.

### DARSTELLUNG DER ERFINDUNG

Es ist eine Aufgabe der Erfindung, eine Dichtungsvorrichtung, insbesondere eine Absenkdichtung zu schaffen, welche sich einfach, insbesondere auch von Hand, montieren lässt.

Diese Aufgabe lösen eine Dichtungsvorrichtung mit den Merkmalen des Patentanspruchs 1 sowie ein Befestigungsmittel mit den Merkmalen des Patentanspruchs 21.

Die erfindungsgemässe Dichtungsvorrichtung für eine Tür oder ein Fenster weist eine Gehäuseschiene und eine in der Gehäuseschiene gehaltene Dichtleiste auf. Die Dichtungsvorrichtung weist ferner mindestens ein Befestigungsmittel zur Befestigung der Gehäuseschiene an einem Tür- oder Fensterflügel der Tür bzw. des Fensters auf, wobei das Befestigungsmittel eine Platte zur Auflage an einer Stirnfläche des Tür- oder Fensterflügels und eine in der Platte angeordnete Durchgangsöffnung für eine Schraube umfasst. Erfindungsgemäss ist in der Durchgangsöffnung ein Rückhaltemittel zum Halten der Schraube vorhanden.

Dadurch lässt sich die Schraube vormontieren. Es lassen sich hierzu handelsübliche Schrauben, insbesondere Holzschrauben, verwenden. Die Montage der Dichtung am Tür- oder Fensterflügel ist vereinfacht, da die Schraube nicht mehr von Hand gehalten werden muss. Der Monteur kann mit einer Hand den Akkuschrauber oder Schraubenzieher halten und mit der anderen Hand hält er die Dichtung, eventuell auch noch das Befestigungsmittel. Eine Einhandmontage und -befestigung der Dichtung im Türflügel ist somit ermöglicht.

Als Türe wird in diesem Text auch ein Tor, insbesondere ein Schiebetor, verstanden. Die Dichtung ist vorzugsweise eine Absenkdichtung mit einer relativ zur Gehäuseschiene anhebbare und absenkbaren Dichtleiste. Sie kann jedoch beispielsweise auch eine Schleifdichtung sein.

Vorzugsweise weist das Rückhaltemittel mindestens einen Arm auf oder ist durch mindestens einen Arm gebildet, welcher die Schraube hält. Dieser Arm ist in der Durchgangsöffnung angeordnet. Diese Ausbildung ist relativ kostengünstig.

Vorzugsweise sind mindestens drei, noch bevorzugter genau drei Arme vorhanden, welche über den Umfang der Durchgangsöffnung verteilt in dieser angeordnet sind. Sie sind vorzugsweise radial zu einem Mittelpunkt der Durchgangsöffnung hin gerichtet. Dadurch lässt sich die Schraube bereits vorzentriert im Durchgangsloch halten und eine Fehlausrichtung in radialer Richtung bei der Montage ist kaum mehr möglich.

In anderen Ausführungsformen sind genau vier Arme vorhanden. Dies ist insbesondere dann vorteilhaft, wenn die Rückhaltemittel, insbesondere die Arme mit Rückhaltefingern, versetzt entlang der Schraubenlänge in die Gewindegänge eingreifen sollen. Dadurch lässt sich die Schraube ohne zu wackeln halten. Sie lässt sich alternativ oder zudem bereits in ihrer für die Endmontage notwendige Ausrichtung halten. Diese Ausrichtung verläuft üblicherweise parallel zur Längsrichtung der Gehäuseschiene.

Vorzugsweise verläuft der mindestens eine Arm in einer durch die Durchgangsöffnung definierten Ebene.

Vorzugsweise ist der mindestens eine Arm derart biegsam ausgebildet, dass er sich beim Eindrehen der Schraube aus der Durchgangsöffnung hinaus biegen lässt. Dadurch lässt sich die Schraube fluchtend mit der Oberfläche der Platte im Tür- oder Fensterflügel versenken. Zudem bricht der mindestens eine Arm nicht ab, so dass auch keine störenden Kleinstteile in der Dichtung liegenbleiben oder allfällige Bodenbeläge wie Parkett, zerkratzen oder anderweitig beschädigen können.

In einer Ausführungsform ist die Schraube in einem rechten Winkel zur Platte in der Durchgangsöffnung gehalten. In einer anderen Ausführungsform ist die Schraube in einem Winkel ungleich 90° zur Platte gehalten. Dies lässt sich erreichen, indem mindestens ein Arm einen gebogenen Rückhaltefinger aufweist.

In einer einfachen Ausführungsform ist das Rückhaltemittel gemeinsam einstückig mit der Platte und vorzugsweise einstückig mit dem gesamten Befestigungsmittel gefertigt. Das Befestigungsmittel ist vorzugsweise ein Stanzwerkstück aus einem Metall, beispielsweise Stahl, ein Kunststoffspritzgussteil oder ein Zinkdruckgussteil. Ist das Rückhaltemittel einstückig mit der Platte oder sogar einstückig mit dem gesamten Befestigungsmittel ausgebildet, so besteht es vorzugsweise aus demselben Material wie die Platte, insbesondere aus Metall oder Kunststoff.

In anderen Ausführungsformen ist das Befestigungsmittel aus einem ersten Material, vorzugsweise aus Metall, und das Rückhaltemittel ist aus einem zweiten Material gefertigt, vorzugsweise aus Kunststoff. Das Rückhaltemittel aus Kunststoff ist in einer Ausführungsform auf die Platte bzw. das Befestigungsmittel aufgespritzt.

In einer anderen Ausführungsform ist das Rückhaltemittel ein Einsatzelement, welches in der Durchgangsöffnung fixierbar ist. Das Rückhaltemittel ist vorzugsweise aus Kunststoff oder Metall gefertigt. Das Befestigungsmittel ist in diesem Ausführungsbeispiel vorzugsweise aus einem Metall, insbesondere Stahl, hergestellt. Das Einsatzelement kann in dieser Ausführungsform auf die Schraube aufgespritzt sein oder als separates Bauteil gefertigt sein.

In bevorzugten Ausführungsformen ist die Schraube mittels eines Klebstofftropfens fixiert gehalten. Dies ist eine äusserst einfache und kostengünstige Fixierung, insbesondere wenn das Rückhaltemittel einstückig mit der Platte ausgebildet ist und/oder wenn das Rückhaltemittel und die Platte aus Metall gefertigt sind.

In einer bevorzugten Ausführungsform ist der gesamte Haltewinkel aus Kunststoff gefertigt, wobei er in seiner Aufnahmeöffnung das Rückhaltemittel aufweist. Das Rückhaltemittel kann einstückig mit dem restlichen Haltewinkel ausgebildet sein oder es kann als Einsatzelement ausgebildet sein. Das Rückhaltemittel kann beispielsweise durch den oben genannten mindestens einen Arm, vorzugsweise durch drei oder vier Arme, gebildet sein.

In einer anderen Ausführungsform weist der Haltewinkel aus Kunststoff einen Haltering auf, welcher die Schraube umschliesst und so das Rückhaltemittel bildet. Der Haltering oder sogar der gesamte Haltewinkel kann auf die Schraube aufgespritzt sein oder als separates Bauteil gefertigt sein. Der Haltewinkel kann mehrstückig ausgebildet sein, z.B. kann der Haltering als Einsatzelement ausgebildet sein. Vorzugsweise ist auch dieser Haltewinkel jedoch einstückig ausgebildet.

Liegen Befestigungsmittel, Rückhaltemittel und Schraube als drei separate Teile vor, bilden bei der Montage je nach Ausführungsform das Befestigungsmittel und Rückhaltemittel zuerst eine Einheit, in welche die Schraube eingesteckt wird oder das Rückhaltemittel ist zuerst auf die Schraube befestigt, bevor beide gemeinsam in die Durchgangsöffnung des Befestigungsmittels eingeführt werden.

In bevorzugten Ausführungsformen weist die Gehäuseschiene einen u-förmigen Querschnitt mit zwei Seitenwänden und einem die zwei Seitenwände miteinander verbindenden oberen Steg auf. Die Platte des Befestigungsmittels verläuft vorzugsweise in einem Winkel von 90° oder grösser zum Steg. Ist das Befestigungsmittel ein Haltewinkel, so ist die Platte durch einen Schenkel des Winkels gebildet und ein zweiter Schenkel des Haltewinkels verläuft in einem Winkel von 90° oder grösser zur Platte.

Ist der Winkel grösser als 90°, so erleichtert dies die automatische oder halbautomatische maschinelle Montage der Dichtung in einem Tür- oder Fensterflügel. Die Dichtung kann mit vormontiertem Befestigungsmittel einfacher in die Türnut eingeschoben werden als bei einem Winkel von genau 90°. Die Platte wird anschliessend durch das Festschrauben der Schraube in der Stirnfläche des Tür- oder Fensterflügels in einen rechten Winkel zum Steg gebogen. Der Winkel von grösser 90° hat zudem den Vorteil, dass bei vormontierter Schraube der zweite Schenkel bereits vollständig in die Gehäuseschiene eingeschoben werden kann und sich beim Eindrehen der Schraube in den Türflügel nicht mehr relativ zur Gehäuseschiene verschieben muss.

Das Befestigungsmittel ist in einer Ausführungsform einstückig mit der Gehäuseschiene ausgebildet oder fest mit diesem verbunden, z.B. angeschweisst oder angeklebt. Es kann jedoch auch als separates Bauteil ausgebildet sein.

In bevorzugten Ausführungsformen ist das Befestigungsmittel ein separater Haltewinkel mit einem ersten und einem zweiten Schenkel, wobei der erste Schenkel die Platte mit der Durchgangsöffnung bildet und der zweite Schenkel unterhalb des Stegs in die Gehäuseschiene einschiebbar ist. Dadurch lässt sich das Befestigungsmittel auf einfache Weise getrennt von der Dichtung herstellen. Zudem sind keine weiteren Elemente notwendig, um die Dichtung mit dem Befestigungselement zu verbinden. Vorzugsweise ist die Dichtung an ihren beiden Stirnseiten mit einem derartigen Befestigungsmittel versehen. Eine einseitige Anordnung und eine alternative Halterung am anderen Ende der Dichtung sind jedoch auch möglich.

Vorzugsweise ist der zweite Schenkel so lang ausgebildet, dass er dem freien Ende der erst vormontierten Schraube vorsteht, so dass der in die Gehäuseschiene eingeschobene Haltewinkel in dieser gehalten ist. Dies erleichtert die einhändige Befestigung des Haltewinkels am Türflügel und somit die Montage der Dichtung.

Vorzugsweise ist am zweiten Schenkel mindestens ein Rückhalteelement vorhanden, welches als Bremse gegen ein Herausfallen des Haltewinkels aus der Gehäuseschiene wirkt. Das Rückhalteelement kann eine Federzunge, eine Erhebung und/oder eine Vertiefung und/oder eine Verbreiterung des zweiten Schenkels oder ein alternatives Mittel sein. Vorzugsweise wirkt das Rückhalteelement lediglich als Bremse, so dass der Haltewinkel selbst bei einer in vertikaler Richtung verlaufender Gehäuseschiene, d.h. bei "Überkopfmontage" nicht aus der Schiene herausfällt, wobei er jedoch nach wie vor ohne grösseren Kraftaufwand von Hand aus der Schiene herausgezogen werden kann. Vorzugsweise bildet diese Bremse lediglich einen Kraftschluss mit der Gehäuseschiene. In alternativen Ausführungsformen ist das Rückhaltemittel jedoch derart ausgebildet, dass der Haltewinkel in der Gehäuseschiene gehalten ist und nur mit einem Werkzeug oder mit grösserem Kraftaufwand von Hand wieder entfernbar ist. In diesem Fall bildet das Rückhaltemittel vorzugsweise einen Kraft- und Formschluss mit der Gehäuseschiene.

In einer erfindungsgemässen Ausführungsform ist das Befestigungsmittel ein Haltewinkel mit einem ersten und einem zweiten Schenkel, wobei der erste Schenkel eine Platte zur Auflage an einer Stirnfläche eines Tür- oder Fensterflügels bildet und eine Durchgangsöffnung für eine Schraube aufweist, wobei in der Durchgangsöffnung ein Rückhaltemittel zum Halten der Schraube vorhanden ist. Vorzugsweise weist das Rückhaltemittel mindestens einen Arm auf, welcher in der Durchgangsöffnung angeordnet ist.

In einer Ausführungsform weist das Einsatzelement einen ringförmigen Grundkörper mit einem Loch auf, wobei das Loch die Durchgangsöffnung für die Schraube bildet und wobei zur Halterung der Schraube mindestens ein Arm in diesem Loch angeordnet ist.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine perspektivische Darstellung eines Türflügels mit montierter Absenkdichtung;
- Figur 2: eine perspektivische Darstellung eines erfindungsgemässen Haltewinkels in einer ersten Ausführungsform;
- Figur 3: eine Ansicht des Haltewinkels gemäss Figur 2 von vorne;
- Figur 4: eine Seitenansicht des Haltewinkels gemäss Figur 2;
- Figur 5: eine perspektivische Ansicht des Haltewinkels gemäss Figur 2 mit vormontierter Schraube;
- Figur 6: eine perspektivische Ansicht des Haltewinkels gemäss Figur 2 mit in einem Türflügel montierter Schraube, ohne Darstellung des Türflügels;
- Figur 7: eine weitere perspektivische Ansicht des Haltewinkels gemäss Figur 2 mit in einem Türflügel montierter Schraube, ohne Darstellung des Türflügels;
- Figur 8: eine Seitenansicht des Haltewinkels gemäss Figur 2 mit vormontierter Schraube;
- Figur 9: eine Seitenansicht des Haltewinkels gemäss Figur 2 mit in einem Türflügel montierter Schraube, ohne Darstellung des Türflügels;
- Figur 10: eine perspektivische Darstellung des Türflügels mit Absenkdichtung gemäss Figur 1 mit vormontiertem Haltewinkel;
- Figur 11: einen Längsschnitt durch den Türflügel gemäss Figur 1 mit vormontiertem Haltewinkel;
- Figur 12: einen Längsschnitt durch den Türflügel gemäss Figur 1 mit montiertem Haltewinkel;
- Figur 13: eine perspektivische Darstellung eines erfindungsgemässen Haltewinkels gemäss einer zweiten erfindungsgemässen Ausführungsform mit vormontierter Schraube;
- Figur 14: eine Vorderansicht des Haltewinkels gemäss Figur 13;
- Figur 15: eine Seitenansicht des Haltewinkels gemäss Figur 13;
- Figur 16: einen Längsschnitt durch einen vergrösserten Ausschnitt gemäss Figur 15;
- Figur 17: eine perspektivische Darstellung des Haltewinkels gemäss Figur 13 im montierten Zustand, jedoch ohne Darstellung des Türflügels und der Dichtung;
- Figur 18: eine Seitenansicht des Haltewinkels gemäss Figur 17 im montierten Zustand;
- Figur 19: eine perspektivische Darstellung des Türflügels mit Absenkdichtung mit einem vormontierten Haltewinkel gemäss Figur 13;
- Figur 20: einen Längsschnitt durch den Türflügel mit Absenkdichtung und Haltewinkel gemäss Figur 19;
- Figur 21: den Längsschnitt gemäss Figur 20 im montierten Zustand;
- Figur 22: eine perspektivische Darstellung eines erfindungsgemässen Haltewinkels gemäss einer dritten erfindungsgemässen Ausführungsform mit vormontierter Schraube;
- Figur 23: eine Vorderansicht des Haltewinkels gemäss Figur 22;
- Figur 24: eine Seitenansicht des Haltewinkels gemäss Figur 22 im vormontierten Zustand;
- Figur 25: eine Seitenansicht des Haltewinkels gemäss Figur 22 nach einer Demontage;
- Figur 26: eine perspektivische Darstellung eines erfindungsgemässen Haltewinkels mit Einsatzelement gemäss einer vierten erfindungsgemässen Ausführungsform mit vormontierter Schraube;
- Figur 27: eine Vorderansicht des Haltewinkels gemäss Figur 26;
- Figur 28: eine perspektivische Darstellung des Einsatzelements gemäss Figur 26;
- Figur 29: einen Längsschnitt durch den Haltewinkel gemäss Figur 26;
- Figur 30: eine Seitenansicht des Haltewinkels gemäss Figur 26;
- Figur 31: eine perspektivische Darstellung eines erfindungsgemässen Haltewinkels gemäss einer fünften erfindungsgemässen Ausführungsform;
- Figur 32: einen Grundriss des Haltewinkels gemäss Figur 31;
- Figur 33: eine Vorderansicht des Haltewinkels gemäss Figur 31, eingeführt in eine Gehäuseschiene einer Absenkdichtung;
- Figur 34: eine Querschnitt durch die Anordnung gemäss Figur 33;
- Figur 35: einen Grundriss eines erfindungsgemässen Haltewinkels gemäss einer sechsten Ausführungsform;
- Figur 36: eine Seitenansicht des Haltewinkels gemäss Figur 35;
- Figur 37: eine Vorderansicht des Haltewinkels gemäss Figur 35, eingeführt in eine Gehäuseschiene einer Absenkdichtung;
- Figur 38: einen Querschnitt durch die Anordnung gemäss Figur 35;
- Figur 39: eine perspektivische Ansicht eines erfindungsgemässen Haltewinkels in einer siebten Ausführungsform;
- Figur 40: eine weitere perspektivische Ansicht des Haltewinkels gemäss Figur 39;
- Figur 41: eine Vorderansicht des Haltewinkels gemäss Figur 39;
- Figur 42: einen Längsschnitt durch den Haltewinkel gemäss Figur 39;
- Figur 43: eine perspektivische Ansicht eines erfindungsgemässen Haltewinkels in einer achten Ausführungsform;
- Figur 44: die perspektivische Ansicht des Haltewinkels gemäss Figur 43 mit vormontierter Schraube;
- Figur 45: eine weitere perspektivische Ansicht des Haltewinkels gemäss Figur 43 mit vormontierter Schraube;
- Figur 46: einen Längsschnitt durch einen Teil des Haltewinkels gemäss Figur 43 mit vormontierter Schraube;
- Figur 47: eine Vorderansicht eines erfindungsgemässen Haltewinkels in einer neunten Ausführungsform;
- Figur 48: eine perspektivische Ansicht des Haltewinkels gemäss Figur 47;
- Figur 49: die perspektivische Ansicht des Haltewinkels gemäss Figur 47 mit vormontierter Schraube und Klebetropfen;
- Figur 50: einen Längsschnitt durch den Haltewinkel gemäss Figur 47;
- Figur 51: eine Vorderansicht eines erfindungsgemässen Haltewinkels in einer zehnten Ausführungsform;
- Figur 52: eine perspektivische Ansicht des Haltewinkels gemäss Figur 51;
- Figur 53: die perspektivische Ansicht des Haltewinkels gemäss Figur 51 mit vormontierter Schraube und
- Figur 54: einen Längsschnitt durch den Haltewinkel gemäss Figur 51.

### BESCHREIBUNG BEVORZUGTER AUSFÜHRUNGSFORMEN

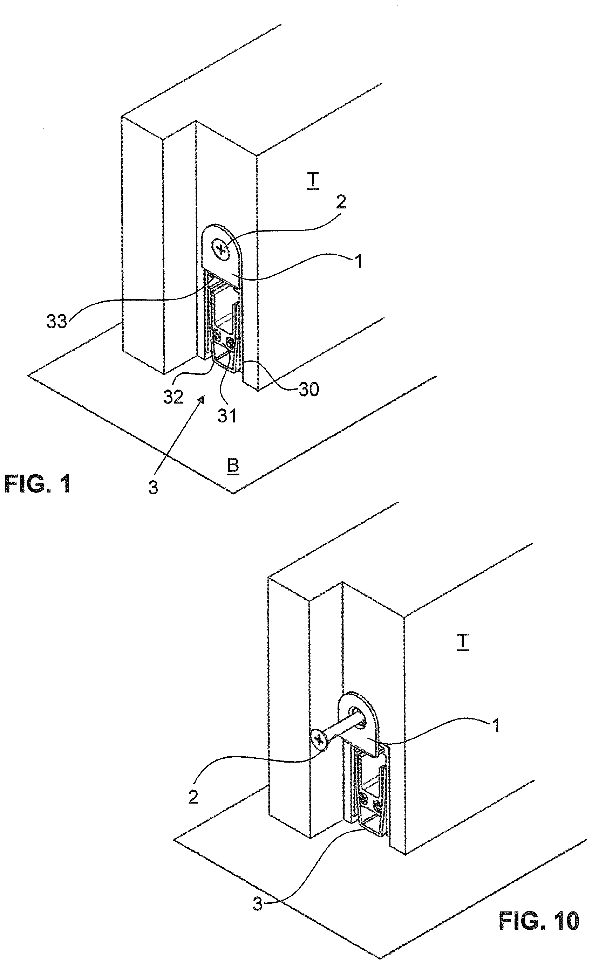

Figur 1 zeigt einen Türflügel T mit einer Nut in seiner unteren Stirnseite. In dieser Nut ist eine Absenkdichtung 3 bekannter Art eingelassen und über einen Befestigungswinkel 1 mit einer Schraube 2 an der seitlichen Stirnfläche der Tür befestigt.

Die hier dargestellte Absenkdichtung 3 weist eine u-förmige, nach unten offen ausgebildete Gehäuseschiene 30 auf, in welcher eine Dichtleiste, d.h. eine Trägerleiste 31 mit einem Dichtelement 32, angeordnet ist. Die Trägerleiste 31 ist relativ zur Gehäuseschiene 30 anhebbar und absenkbar, wobei hierzu ein in den Figuren nicht sichtbarer Mechanismus in der Gehäuseschiene 30 vorhanden ist. Im abgesenkten Zustand dichtet das Dichtelement 32 gegenüber einem Boden B.

Die Auslösung der Dichtung und somit das Anheben und Absenken erfolgt üblicherweise über einen stirnseitig der Dichtung einseitig vorstehenden Betätigungsstab, welcher beim Schliessen des Türflügels am Türrahmen ansteht und eingedrückt wird, so dass der Mechanismus zum Absenken aktiviert wird. Beim Öffnen des Türflügels wird der Betätigungsstab entlastet und die Dichtleiste hebt sich dank Rückstellfedern wieder an.

Die Auslösung der Dichtung kann auch auf andere Art und Weise erfolgen, beispielsweise manuell, motorbetrieben oder magnetisch. Des Weiteren kann die Dichtung auch eine Schleifdichtung sein, welche somit beim Schliessen der Türe nicht abgesenkt wird. Ebenso kann das Dichtelement 32 eine andere als die hier dargestellte Form aufweisen.

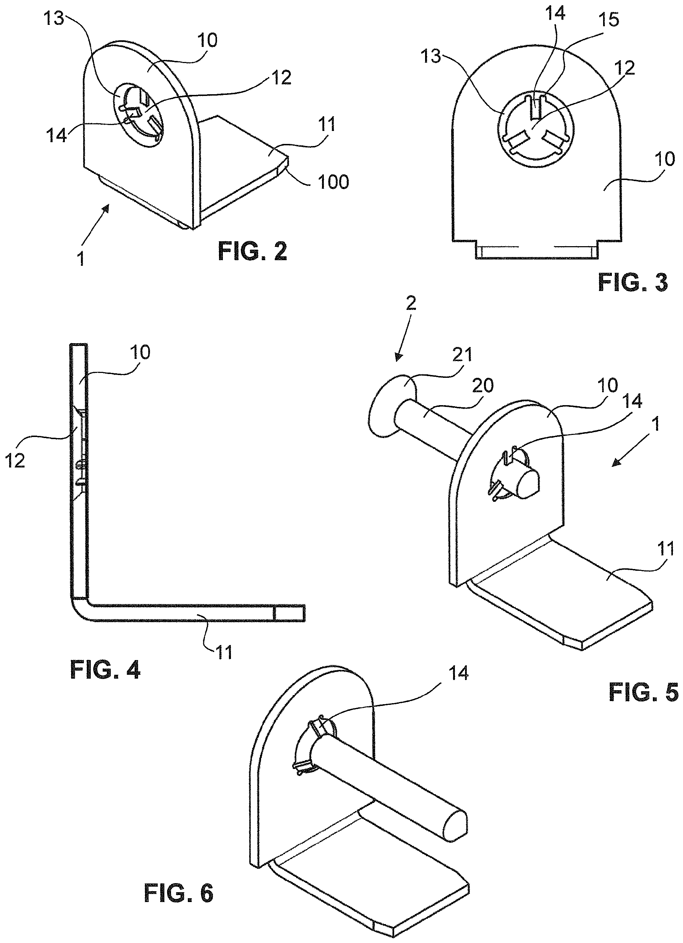

Die Figuren 2 bis 12 zeigen ein erstes Ausführungsbeispiel des erfindungsgemässen Haltewinkels 1. Der Haltewinkel 1 weist einen ersten Schenkel 10 zur Anlage an die Stirnseite des Türflügels T und einen zweiten Schenkel 11 auf, welcher in eine Nut 33 (siehe Figur 1) der Gehäuseschiene 30 einschiebbar ist. Zur erleichterten Einführung weist der zweite Schenkel 11 an seinem freien Ende vorzugsweise einen Einlauf 100 in Form einer Schrägkante auf. Der ersten Schenkel 10 bildet eine Platte.

Der Haltewinkel 1 ist vorzugsweise aus einem Metall, insbesondere Stahl, gefertigt. Er ist einstückig ausgebildet. Beide Schenkel 10, 11 sind vorzugsweise flächig ausgebildet.

Der erste Schenkel 10 weist eine Durchgangsöffnung 12 für die Schraube 2 auf. Es können auch mehr als eine derartige Öffnung vorhanden sein, wobei in diesem Fall vorzugsweise alle Öffnungen wie nachfolgend beschrieben erfindungsgemäss ausgebildet sind.

Die Durchgangsöffnung 12 weist eine umlaufende Ansenkung 13 in Form einer Schrägfläche zur Versenkung eines Schraubenkopfs 21 auf. Ferner sind in der Durchgangsöffnung 12 drei Arme 14 vorhanden, welche radial nach innen zum Mittelpunkt der Öffnung 12 hin ragen. Sie sind jedoch vorzugsweise kürzer als der Radius, so dass sie nicht bis zum Mittelpunkt reichen. Es können auch weniger oder mehr als diese drei Arme 14 vorhanden sein. Die Arme 14 fluchten vorzugsweise mit der Rückseite des ersten Schenkels 10. Die Rückseite ist dem freien Ende des zweiten Schenkels 11 und/oder im montierten Zustand der seitlichen Stirnfläche des Türflügels T zugewandt. Die Arme 14 fluchten mit ihrer gegenüberliegenden Oberfläche vorzugsweise mit dem dieser Rückseite benachbarten Grund der umlaufenden Ansenkung 13. Vorzugsweise sind die Arme 14 dünnwandiger ausgebildet als der erste Schenkel 10. Sie sind dadurch oder aufgrund einer anderen Ausgestaltung vorzugsweise biegsam. Die Biegsamkeit lässt sich zudem durch den Armen 14 benachbarte Ausnehmungen 15 im Umfang der Durchgangsöffnung 12 erhöhen. Die Arme 14 sind in diesem Beispiel aus demselben Material wie der restliche Haltewinkel 1 gefertigt und bilden als Rückhaltemittel einen Teil des einstückigen Halterwinkels 1.

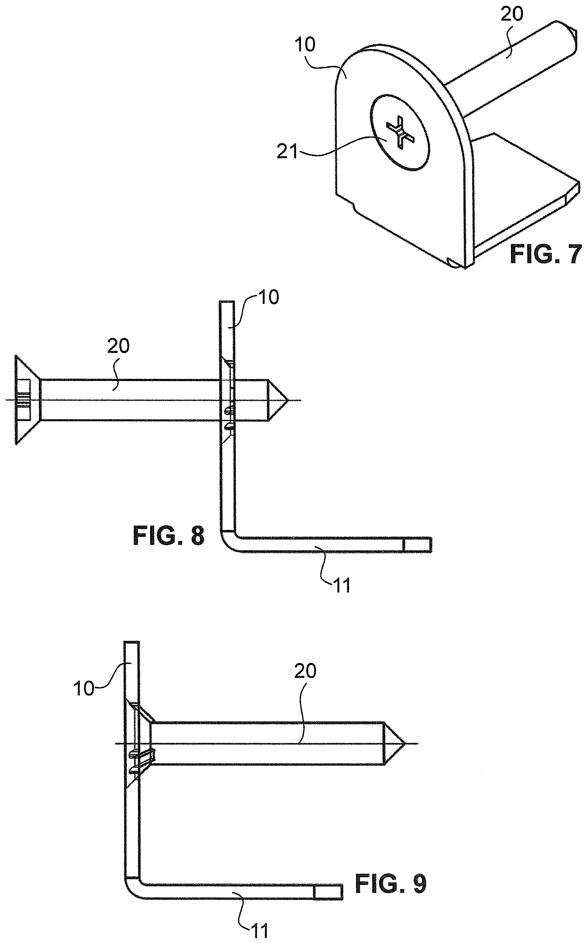

In den Figuren 5 und 8 durchdringt die Schraube 2 mit ihrem Schaft 20 die Öffnung 12 des Haltewinkels und ist dank den Armen 14 in dieser Position gehalten. Der Schraubenschaft 20 erstreckt sich dabei annähernd oder vorzugsweise genau senkrecht zur Platte, d.h. zum ersten Schenkel 10. In den Figuren Figur 6, 7 und 9 ist die Schraube 2 vollständig in den Türflügel eingeschraubt, wobei der Türflügel T selber nicht dargestellt ist. Der Schraubenkopf 2 fluchtet mit der äusseren Oberfläche des ersten Schenkels 10. Die Arme 14 sind nach innen bzw. zur Rückseite hin gebogen und liegen vorzugsweise einer umlaufenden Schrägfläche des Schraubenkopfs 21 an. Die Arme 14 sind vorzugsweise in das Holz des Türflügels T eingedrückt. Die Schraube 2 ist in diesem Beispiel länger als der zweite Schenkel.

In Figur 10 ist die Dichtung im vormontierten Zustand dargestellt. Sie befindet sich bereits in der Türnut und sie ist bereits mit dem Winkelelement 1 versehen. Die Schraube 2 ist im Winkelelement 2 gehalten und kann nicht herausfallen. Sie ist jedoch noch nicht eingeschraubt.

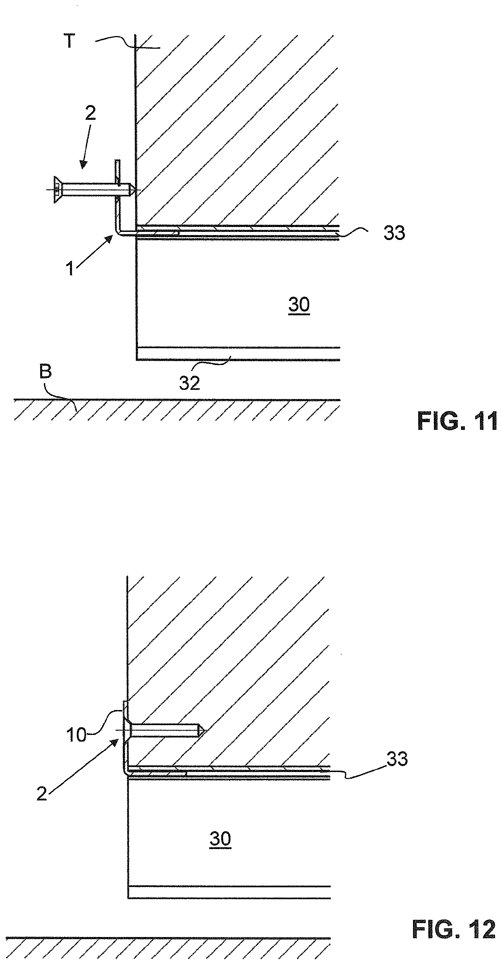

Wie in Figur 11 erkennbar ist, ist die Schraube 2 durch den Haltewinkel 1 geführt und in senkrechter Position zur Stirnfläche des Türflügels gehalten. Sie lässt sich nun einhändig einschrauben, bis der Haltewinkel 1 auf der Stirnfläche des Türflügels anliegt und die Dichtung in der Tür fixiert. Dies ist in Figur 12 dargestellt.

Nachfolgend sind noch weitere Ausführungsbeispiele erläutert. Das oben Gesagte, insbesondere die oben angegebenen Varianten, treffen auch auf diese Ausführungsbeispiele zu.

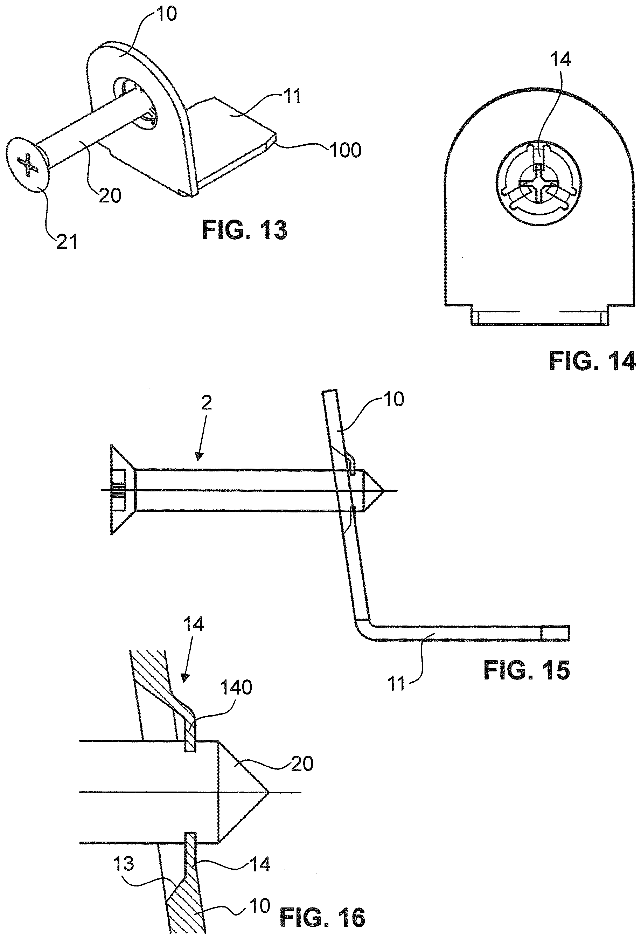

In den Figuren 13 bis 21 ist ein zweites Ausführungsbeispiel eines erfindungsgemässen Haltewinkels dargestellt. Hier bilden der erste und zweite Schenkel 10, 11 nicht, wie im ersten Beispiel, einen rechten Winkel. Der Winkel ist vielmehr grösser als 90°.

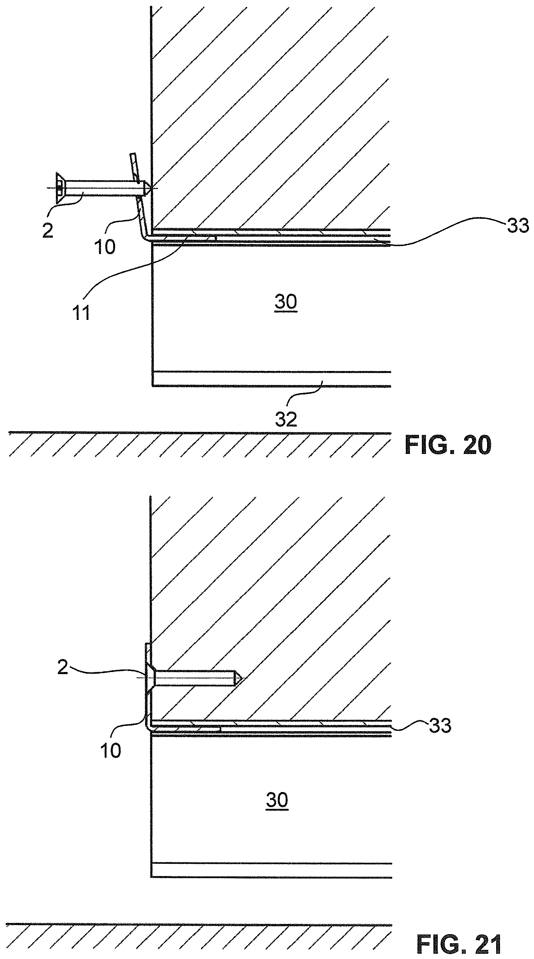

Die Schraube 2 ist jedoch trotzdem vorzugsweise parallel zum zweiten Schenkel 11 gehalten und kann nicht herausfallen, wie dies in den Figuren 15 und 20 gut erkennbar ist. Hierzu ist mindestens ein Arm 14, vorzugsweise der oder die sich in der oberen Hälfte der Durchgangsöffnung 12 befindlichen Arme 14, gekröpft ausgebildet. Er weist beispielsweise einen Rückhaltefinger 140 auf. Dieser Rückhaltefinger 140 verläuft in einem Winkel zum restlichen Arm 14 und bildet das freie Ende des Arms 14. Die sich in unteren Hälfte der Öffnung 12 befindlichen Arme 14 weisen vorzugsweise keine derartigen Rückhaltefinger 140 auf, sondern sind wie im ersten Beispiel geradlinig ausgebildet. Sie stehen, wie in Figur 16 dargestellt, vorzugsweise in einem Winkel der Rückseite des ersten Schenkels 10 vor .

Dank dieser rechtwinkligen Anordnung der Schraube 2 lässt sich der Haltewinkel wiederum so in der Dichtung vormontieren, dass er nicht herausfallen kann, und er lässt sich einhändig am Türflügel anschrauben. Der Haltewinkel 1 muss beim Eindrehen der Schraube nicht zusätzlich von Hand gehalten werden. Zudem muss die Schraube 2 nicht im Winkel positioniert werden.

Diese Ausführungsform hat zudem den Vorteil, dass der zweite Schenkel 11 bereits bei der Vormontage vollständig in die Gehäuseschiene 3 eingeschoben werden kann und sich somit der Haltewinkel 1 beim Festschrauben am Türflügel nicht mehr relativ zur Gehäuseschiene 3 verschieben muss.

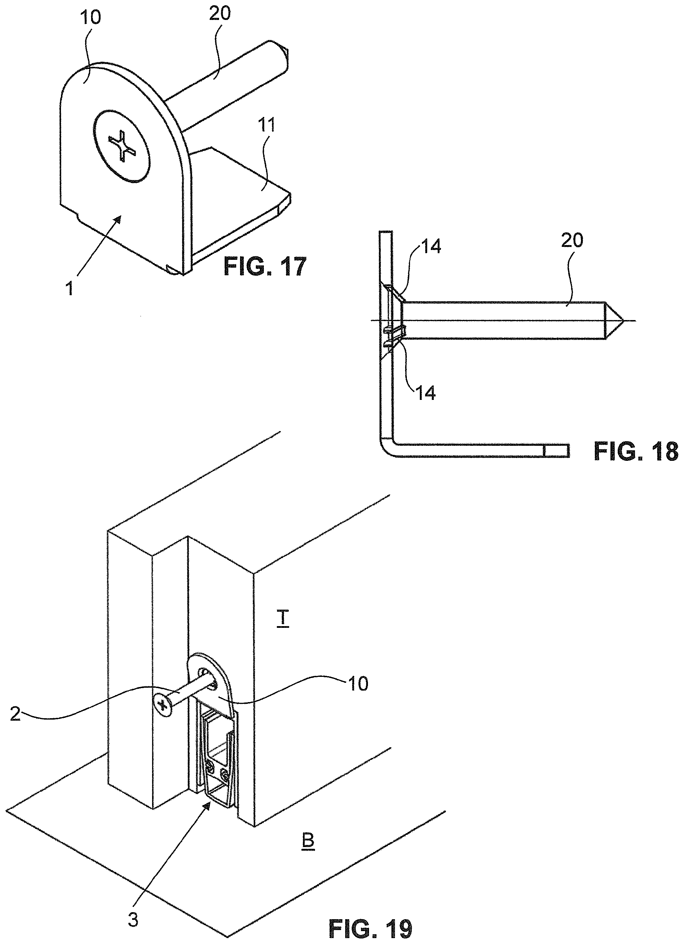

Beim Einschrauben biegt sich der erste Schenkel 10 zur Stirnfläche der Tür bzw. zum zweiten Schenkel 11 hin, bis die zwei Schenkel 10, 11 einen rechten Winkel bilden. Dies ist in den Figuren 17, 18 und 21 dargestellt.

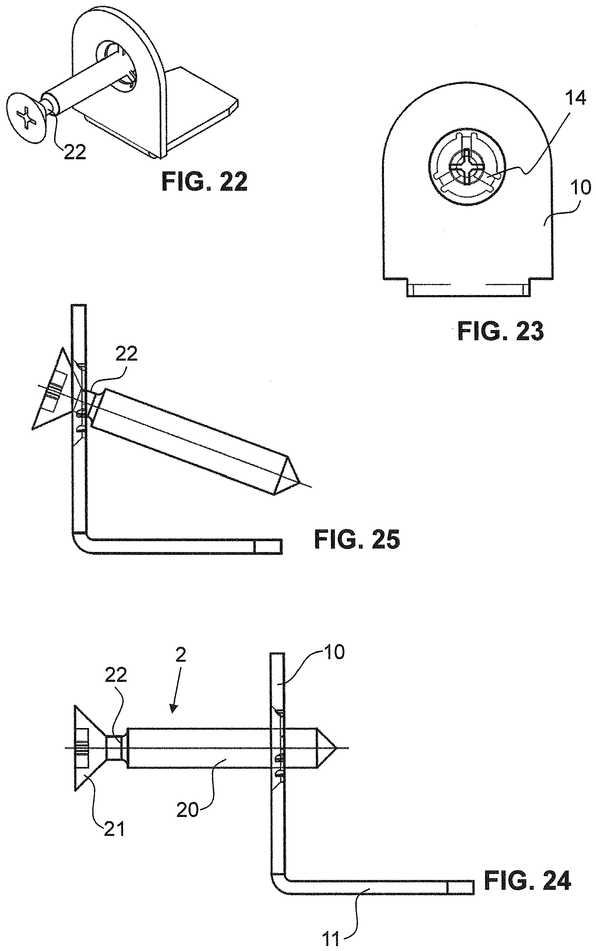

Die Figuren 22 bis 25 zeigen ein weiteres Ausführungsbeispiel. Die Schraube weist zwischen Schaft 20 und Kopf 21 eine Einschnürung 22 auf. Es ist somit eine bekannte unverlierbare Schraube. Sie ist, wie in den Figuren 22 und 24 dargestellt, in der gleichen Lage vormontiert wie die oben beschriebenen Schrauben. Wird der Haltebügel 1 vom Türflügel T demontiert und der Haltebügel 1 aus der Gehäuseschiene 3 gezogen, so verbleibt die Schraube 2 im Haltewinkel 1, wie dies in Figur 25 erkennbar ist.

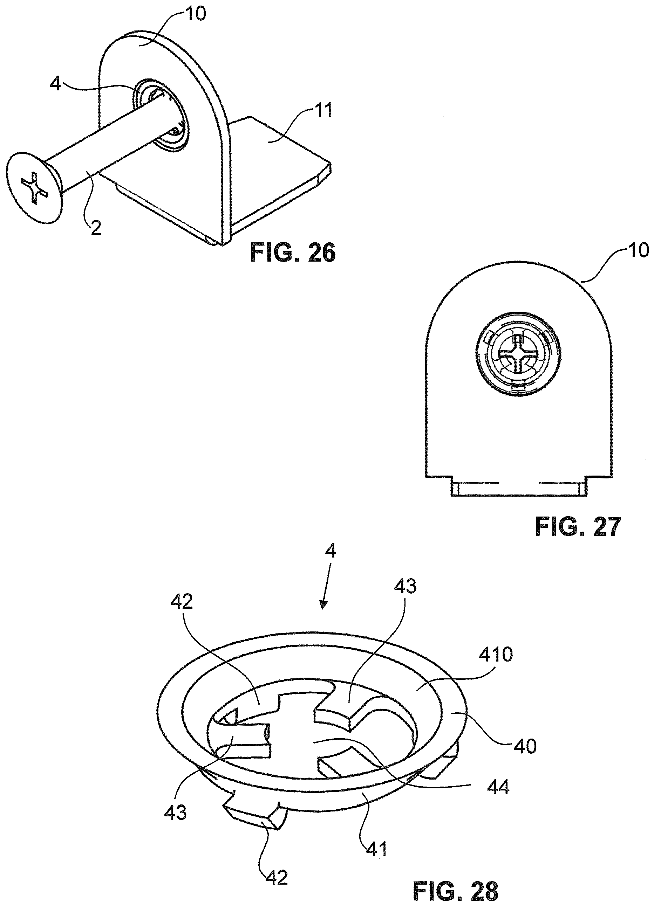

In den bisher beschriebenen Ausführungsbeispielen bildeten die Arme 14 ein Rückhaltemittel, welches einstückig mit dem restlichen Haltewinkel 1 ausgebildet ist. Im Ausführungsbeispiel gemäss den Figuren 26 bis 30 ist das Rückhaltemittel ein Einsatzelement 4, welches in der Öffnung 12 gehalten ist. Es ist vorzugsweise unverlierbar darin gehalten. Diese Einsatzelement 4 ist in Figur 28 gut erkennbar. Es weist einen kreisförmigen Grundkörper 41 mit einem umlaufenden Flansch 40 und einer Durchgangsöffnung 44 auf. Der Grundkörper 41 bildet auf seiner Innenseite, d.h. als Umfang der Öffnung 44, eine abgeschrägte Oberfläche bzw. eine umlaufende Ansenkung 410 in Form einer Schrägfläche zur Aufnahme des Schraubenkopfes 21. Am Ende dieser Ansenkung 410 sind wiederum radial zum Mittelpunkt hin gerichtete Arme 43 vorhanden, welche die Schraube 2 so in ihrer vormontierten Position halten, dass diese nicht herausfallen kann. Wie in dieser Figur 28 erkennbar ist, sind die freien Enden der Arme 43 vorzugsweise gerundet und vorzugsweise verschränkt ausgebildet, entsprechend dem Umfang bzw. Gewindegang des Schraubenschaftes 20 angepasst. Dasselbe gilt auch für die oben beschriebenen anderen Ausführungsformen.

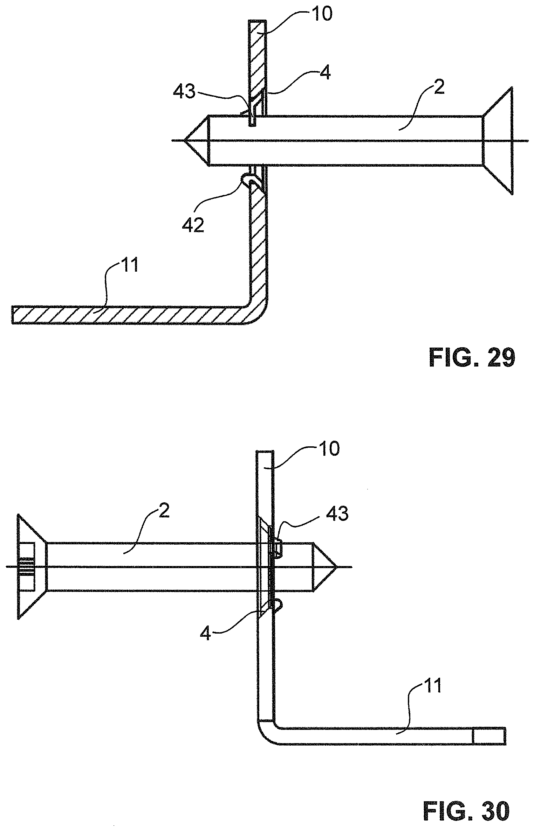

Das Einsatzelement 4 weist an seinem äusseren Umfang Rückhaltenasen 42 auf, welche vorzugsweise über den Umfang verteilt angeordnet sind und radial nach aussen ragen. Sie dienen dazu, das Einsatzelement 4 in der Öffnung 12 des ersten Schenkel 10 zu halten. Die Rückhaltenasen 42 sind vorzugsweise als Einrastelemente ausgebildet, wie dies in Figur 29 gut erkennbar ist.

Das Einsatzelement 4 ist vorzugsweise aus Kunststoff oder aus Metall gefertigt. Es ist entweder vor dem Zusammenfügen von Schraube und Haltewinkel entweder mit der Schraube verbunden oder bereits im Haltewinkel gehalten, insbesondere eingesteckt. Ist es aus Kunststoff gefertigt, kann es auch direkt an die Schraube 2 oder auf den Haltewinkel 1 aufgespritzt sein.

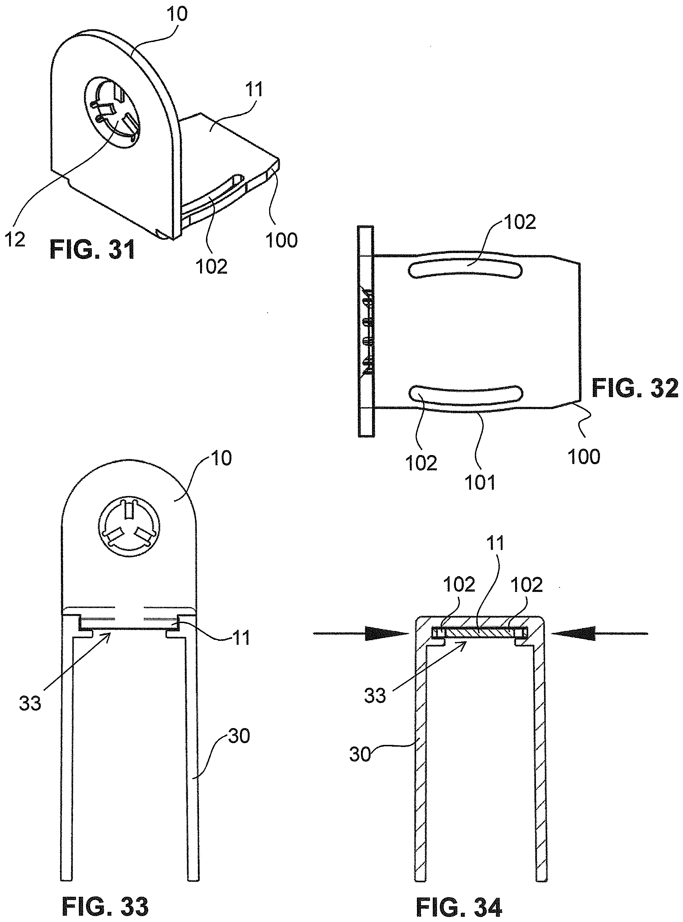

In den Figuren 31 bis 38 sind zwei Varianten von erfindungsgemässen Haltewinkeln 1 dargestellt. Diese können mit den obigen Ausführungsbeispielen beliebig kombiniert werden. In der Ausführungsform gemäss den Figuren 31 bis 34 weist der zweite Schenkel 11 beidseitig eine Ausbuchtung oder Verbreiterung 101 in Richtung senkrecht zum ersten Schenkel 10 auf. Im Bereich dieser Verbreiterung 101 verläuft im Randbereich je ein Längsschlitz 102. Der Längsschlitz 102 ist vorzugsweise gebogen. Der zweite Schenkel bildet somit eine Bremse gegen ein Herausfallen des Haltewinkels 1 aus der Gehäuseschiene 3 . Beim Einführen des zweiten Schenkels 11 in die Nut 33 der Gehäuseschiene 3 (siehe Figur 33) wird der zweite Schenkel 11 in diesem Bereich zusammengedrückt und der Haltewinkel 1 ist somit in der Gehäuseschiene 3 gehalten, ohne jedoch bereits mit diesem fest fixiert zu sein. Dies ist in Figur 34 dargestellt. Der Haltewinkel 1 lässt sich jedoch vorzugsweise nach wie vor von Hand ohne grösseren Kraftaufwand entfernen. Je nach Ausführungsform des Rückhalteelements können jedoch auch grössere Kräfte oder ein Werkzeug notwendig sein, um den Haltewinkel wieder von der Gehäuseschiene zu trennen.

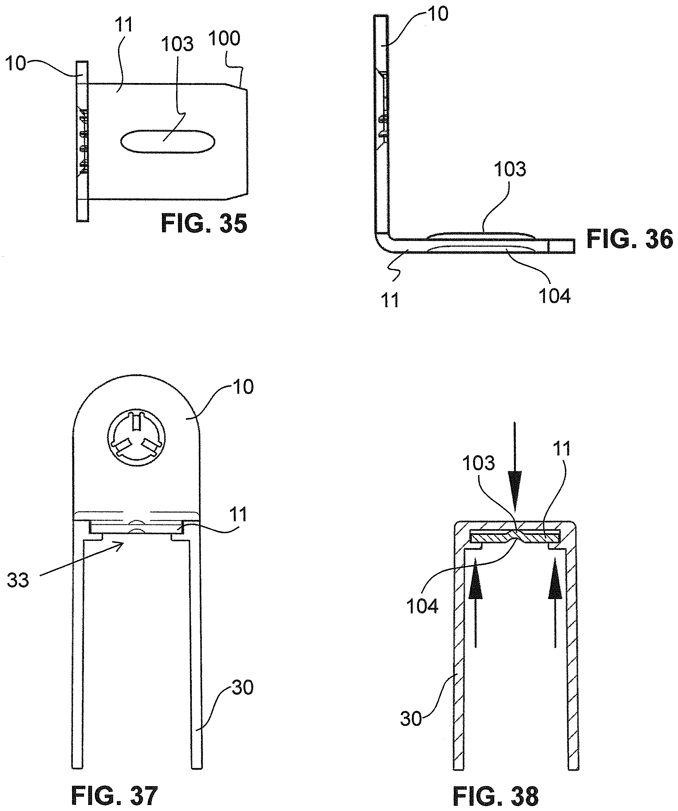

In der Ausführungsform gemäss den Figuren 35 bis 38 ist der zweite Schenkel 11 in einem Bereich mit einer Biegung versehen. Es ist vorzugsweise eine Längsbiegung, welche sich vorzugsweise im mittleren Bereich des Schenkels 11 befindet. Der Schenkel 11 weist dadurch eine Erhebung 103 und eine Vertiefung 104 auf. Auch dies führt dazu, dass nach Einführen in die Nut 33 Klemmkräfte wirken und der Haltewinkel 1 so in der Gehäuseschiene 3 gehalten ist, dass er nicht herausfallen kann. Die ist in Figur 38 erkennbar.

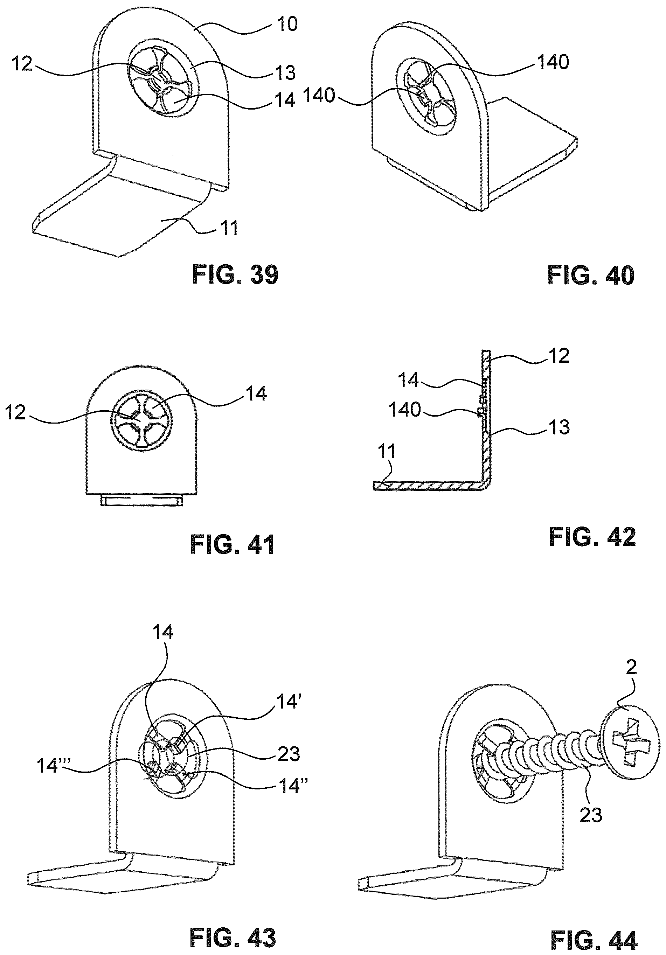

In den Figuren 39 bis 42 ist ein weiteres Ausführungsbeispiel dargestellt. Auch sind wiederum Arme 14 vorhanden, welche vorzugsweise einstückig mit dem ersten Schenkel 10 ausgebildet sind.

In dieser Ausführungsform sind die Arme 14 oder Lappen breiter ausgebildet als in den bisher beschriebenen Varianten. Jeder Arm weist in diesem Beispiel die Form einer halben Ellipse oder eines Halbkreises auf. Sie bilden an ihren freien Enden einen gemeinsamen, annähernd geschlossenen Umfang einer Öffnung 12, in welcher die Schraube 2 aufgenommen ist. Vorzugsweise berühren sich die Arme 14 jedoch an diesen freien Enden nicht.

Die freien Enden weisen abgewinkelte Rückhaltefinger 140 auf. Zwei davon erstrecken sich auf die dem zweiten Schenkel 11 zugewandte Seite des Haltewinkels 1. Die zwei anderen Rückhaltefinger 140 sind auf die dem zweiten Schenkel 11 abgewandte Seite des Haltewinkels 1 gebogen. Vorzugsweise sind je zwei benachbarte Rückhaltefinger 140 in dieselbe Richtung ausgerichtet.

Jeder Rückhaltefinger 140 bildet vorzugsweise einen annähernd rechten Winkel mit seinem restlichen Arm 14. Jeder Arm 14 verläuft vorzugsweise annähernd parallel zum ersten Schenkel 10. Vorzugsweise sind alle Arme 14 in Form und Ausrichtung identisch ausgebildet bis auf die Richtung ihrer Rückhaltefinger 140. Die Arme 14 sind vorzugsweise gleichmässig über den inneren Umfang der Ansenkung 13 verteilt angeordnet. Vorzugsweise sind genau vier Arme 14 vorhanden, wobei jeder davon einen Rückhaltefinger 140 aufweist. Die Rückhaltefinger 140 greifen dabei vorzugsweise im Verlauf des Schraubengewindes versetzt in den Gewindegang 23 ein.

Es hat sich gezeigt, dass diese Anordnung die Schraube 2 besser fixiert und sie in ihrer vormontierten Lage weniger wackelt. Zudem lässt sich die Schraube 2 bereits in der vormontierten Position selbsttätig in einer waagrechten Position halten, d.h. parallel zum zweiten Schenkel 11, so dass sie vor der definitiven Montage in der Tür nicht mehr ausgerichtet werden muss.

In den Figuren 43 bis 46 ist ebenfalls eine Ausführungsform dargestellt, bei welcher die Schraube 2 optimal in ihrer vormontierten Position gehalten ist.

In diesem Ausführungsbeispiel sind die Arme 14, 14', 14", 14'" so gebogen, dass sie mit ihren Rückhaltefingern 140 dem Verlauf des Schraubengewindes versetzt in den Gewindegang 23 eingreifen. Die Arme 14, 14', 14", 14'" sind entsprechend unterschiedlich gebogen ausgebildet. Ihre Rückhaltefinger 140 erstrecken sich alle in dieselbe Richtung, d.h. auf die dem zweiten Schenkel 11 zugewandte Seite.

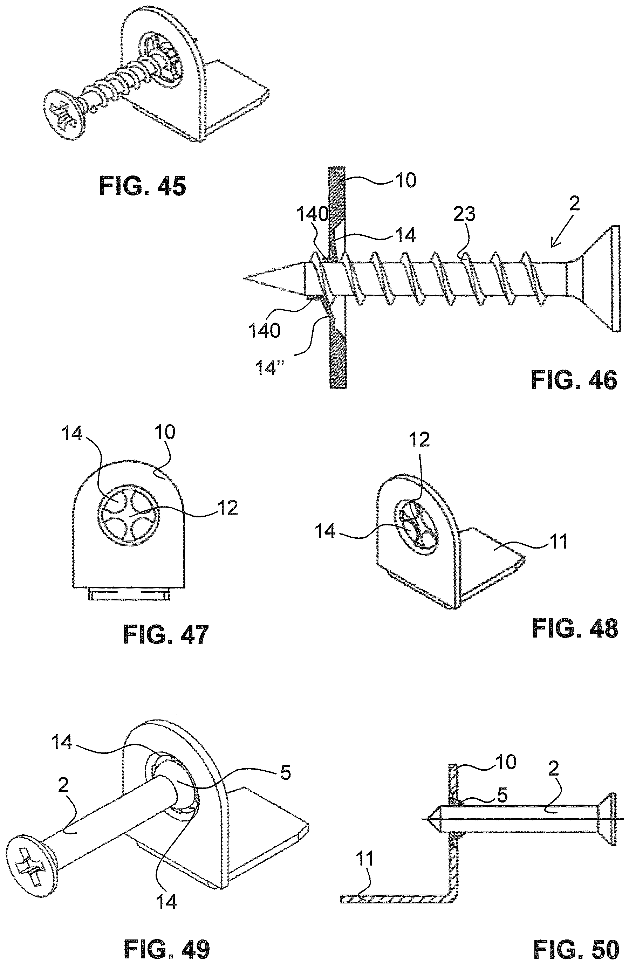

Der erste Arm 14 ist annähernd rechtwinklig ausgebildet, wobei ein Schenkel des Arms 14 durch den Rückhaltefinger 140 gebildet ist. Der benachbarte zweite Arm 14' ist identisch ausgebildet oder er bildet einen zweiten Winkel, welcher eine Schrägfläche zwischen dem Rückhaltefinger 140 und dem gegenüberliegenden Ende des Arms 14' bildet. Dabei ist diese Schrägfläche so geneigt, dass der Rückhaltefinger 140 dieses zweiten Arms 14' weiter dem ersten Schenkel 10 vorsteht als der erste Rückhaltefinger 140 des ersten Arms 14. Auch der dritter Arm 14" und der vierte Arm 14"' weisen Schrägflächen auf, welche so gerichtet sind, dass die entsprechenden Rückhaltefinger 140 jeweils noch mehr vorstehen. Dadurch folgen sie dem Gewindegang 23 der Schraube 2, wie dies in den Figuren 44 und 46 gut erkennbar ist.

Die Schrägflächen können alle nach innen gerichtet sein, also auf die dem zweiten Schenkel 11 zugewandten Seite. Ein oder mehr Schrägflächen können jedoch auch nach aussen geneigt sein, also auf die dem zweiten Schenkel 11 gegenüberliegenden Seite des ersten Schenkels 10.

In den Figuren 47 bis 50 ist eine weitere Ausführungsform dargestellt, bei welcher ein Wackeln der vormontierten Schraube 2 verhindert wird und/oder die Schraube 2 bereits im vormontierten Zustand in ihrer bei Montage benötigten Parallellage zum zweiten Schenkel 11 fest angeordnet ist.

Auch in diesem Beispiel sind die Finger 14 vorzugsweise flächig ausgebildet, wobei sie vorzugsweise wiederum die Form von Halbellipsen oder Halbkreisen aufweisen. Rückhaltefinger 140 sind je nach Ausführungsform vorhanden oder nicht. In den vorliegenden Figuren sind keine dargestellt. Die Schraube 2 ist der Durchgangsöffnung 12 des ersten Schenkels 10 mit einem Klebstofftropfen 5 fixiert gehalten. Beim Einschrauben der Schraube 2 wird ihre Verbindung mit dem Klebstofftropfen 5 durch das Schraubengewinde gelöst und die Schraube 2 lässt sich relativ zum Haltewinkel 1 verschieben.

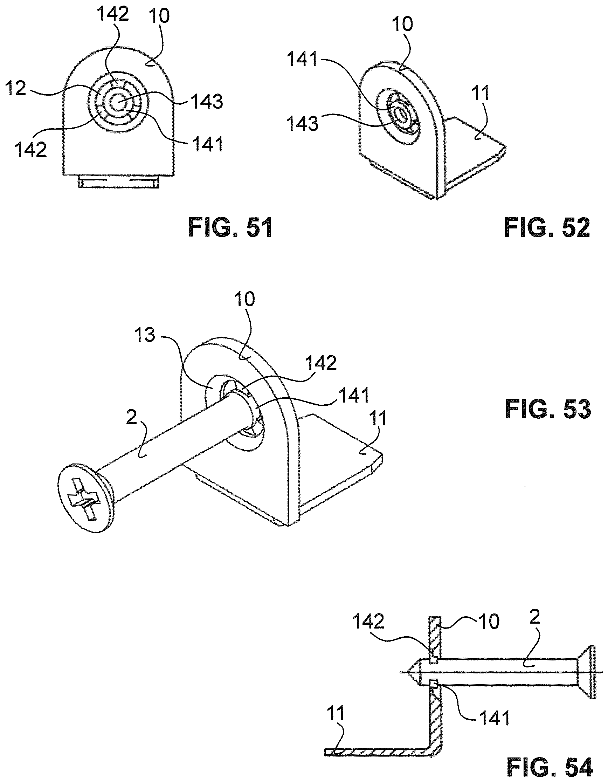

In den Figuren 51 bis 54 ist ein weiteres Ausführungsbeispiel dargestellt. Dieses weist den Vorteil auf, dass es einfach und kostengünstig herstellbar ist und trotzdem eine optimale Halterung der Schraube im vormontierten Zustand ermöglicht, wobei sie in ihrem vormontierten Zustand bereits die korrekte Ausrichtung für ihre definitive Montage aufweist. Dies ist hier erreicht, indem der gesamten Haltewinkel 1 inklusive die Rückhaltemittel aus Kunststoff gefertigt sind. Er lässt sich somit auf die Schraube 2 aufspritzen. In der hier dargestellten Ausführungsform weist der Winkel 1 wiederum den ersten und zweiten Schenkel 10, 11 auf, welche vorzugsweise einen rechten Winkel bilden. In der Durchgangsöffnung des ersten Schenkels 10 ist zentrisch ein Haltering 141 angeordnet, welcher über Stege 142 mit dem ersten Schenkel 10 verbunden ist. Hier sind drei Stege 142 vorhanden, welche über dem Umfang gleichmässig verteilt angeordnet sind. Der Haltering 141 weist eine durchgehende Aufnahmeöffnung 143, welche von der Schraube 2 durchsetzt ist. Der Haltering 141 bildet somit das Rückhaltemittel für die Schraube 2 in ihrem vormontierten Zustand.

Die Stege 142 weisen vorzugsweise Sollbruchstellen auf oder sind dünn bzw. schwach genug ausgebildet, um beim Eindrehen der Schraube 2 während der Montage der Dichtung zu brechen, so dass die Schraube 2 definitiv in die Türe eingeschraubt werden kann.

Damit der Haltewinkel 1 auch in Kunststoffausführung genügend stabil ist, um die Absenkdichtung in der Tür zu halten, ist der erste Schenkel 10 vorzugsweise genügend dick ausgebildet. Wie in den Figuren erkennbar ist, ist er vorzugsweise dicker als der zweite Schenkel 11.

In einer Ausführungsform wird der Haltewinkel 1 aus Kunststoff als eigenständiges einstückiges Element hergestellt und nachträglich mit der Schraube verbunden. Beispielsweise nachträglich verschweisst, verklebt oder mit Presssitz verbunden. Vorzugsweise der Haltewinkel 1 jedoch auf die Schraube 2 aufgespritzt, so dass der Haltering 141 durch Umspritzung der Schraube 2 entsteht.
Alle oben beschriebenen Ausführungsformen der Haltewinkel mit einstückig angeformten Rückhaltemittel lassen sich aus Metall oder aus Kunststoff fertigen. Sind sie aus Kunststoff gefertigt, lassen sie sich als eigenständige Elemente fertigen und nachträglich mit der Schraube verbinden. Sie lassen sich jedoch auch in dieser Form auf die Schraube, insbesondere eine Metallschraube, aufspritzen.
In den erwähnten Zeichnungen sind die Schrauben teilweise ohne Gewinde dargestellt. Dies erfolgte lediglich zur Vereinfachung der Darstellung. Die Schrauben weisen jeweils ein Gewinde auf.

Die erfindungsgemässe Dichtungsvorrichtung und der erfindungsgemässe Haltewinkel ermöglichen eine einhändige Montage des Haltewinkels am Türflügel und erleichtern somit die Montage der Dichtung.

**BEZUGSZEICHENLISTE**

| | | | |
|---|---|---|---|
| 1 | Befestigungswinkel | 22 | Einschnürung |
| 10 | erster Schenkel | 23 | Gewindegang |
| 100 | Einlauf | | |
| 101 | Ausbuchtung | 3 | Dichtung |
| 102 | Längsschlitz | 30 | Gehäuseschiene |
| 103 | Erhebung | 31 | Trägerschiene |
| 104 | Vertiefung | 32 | Dichtelement |
| 11 | zweiter Schenkel | 33 | Nut |
| 12 | Durchgangsöffnung | | |
| 13 | Ansenkung | 4 | Einsatzelement |
| 14 | Arm | 40 | Flansch |
| 14' | zweiter Arm | 41 | Grundkörper |
| 14" | dritter Arm | 410 | Ansenkung |
| 14"' | vierter Arm | 42 | Rückhaltenase |
| 140 | Rückhaltefinger | 43 | Arm |
| 141 | Haltering | 44 | Durchgangsöffnung |
| 142 | Steg | | |
| 143 | Aufnahmeöffnung | 5 | Klebstofftropfen |
| 15 | Ausnehmung | | |
| | | T | Türflügel |
| 2 | Schraube | B | Boden |
| 20 | Schraubenschaft | | |
| 21 | Schraubenkopf | | |

## Patentansprüche

1. Dichtungsvorrichtung für eine Tür oder ein Fenster, wobei die Dichtungsvorrichtung eine Gehäuseschiene (30) und eine in der Gehäuseschiene (30) gehaltene Dichtleiste (31, 32) aufweist und wobei die Dichtung ferner mindestens ein Befestigungsmittel (1) zur Befestigung der Gehäuseschiene (30) an einem Tür- oder Fensterflügel (T) der Tür bzw. des Fensters aufweist, wobei das Befestigungsmittel (1) eine Platte (10) zur Auflage an einer Stirnfläche des Tür- oder Fensterflügels (T) und eine in der Platte (10) angeordnete Durchgangsöffnung (12) für eine Schraube (2) umfasst, **dadurch gekennzeichnet, dass** in der Durchgangsöffnung (12) ein Rückhaltemittel (14, 43, 141) zum Halten der Schraube (2) vorhanden ist.

2. Dichtungsvorrichtung nach Anspruch 1, wobei das Rückhaltemittel mindestens einen Arm (14, 43) zur Halterung der Schraube (2) aufweist, wobei der Arm (14, 43) in der Durchgangsöffnung (12) angeordnet ist.

3. Dichtungsvorrichtung nach Anspruch 2, wobei mindestens drei Arme (14, 43) vorhanden sind, welche über den Umfang der Durchgangsöffnung (12) verteilt in dieser angeordnet sind.

4. Dichtungsvorrichtung nach Anspruch 3, wobei die mindestens drei Arme (14, 43) radial zu einem Mittelpunkt der Durchgangsöffnung (12) hin gerichtet sind.

5. Dichtungsvorrichtung nach einem der Ansprüche 2 bis 4, wobei der mindestens eine Arm (14, 43) in einer durch die Durchgangsöffnung (12) definierten Ebene verläuft.

6. Dichtungsvorrichtung nach einem der Ansprüche 2 bis 5, wobei der mindestens eine Arm (14, 43) derart biegsam ausgebildet ist, dass er sich beim Eindrehen der Schraube (2) aus der Durchgangsöffnung (12) hinaus biegen lässt.

7. Dichtungsvorrichtung nach einem der Ansprüche 2 bis 6, wobei genau vier Arme (14) vorhanden sind.

8. Dichtungsvorrichtung nach einem der Ansprüche 2 bis 7, wobei mehr als ein Arm (14) vorhanden ist und wobei die Arme (14) so ausgerichtet sind, dass sie im vormontierten Zustand der Schraube (2) entlang eines Gewindes der Schraube (2) versetzt in Gewindegänge (23) des Gewindes eingreifen.

9. Dichtungsvorrichtung nach einem der Ansprüche 2 bis 8, wobei mindestens ein Arm (14, 43) einen gebogenen Rückhaltefinger (140) aufweist, um die Schraube (2) in einem Winkel ungleich 90° zur Platte (10) zu halten.

10. Dichtungsvorrichtung nach einem der Ansprüche 2 bis 8, wobei mindestens ein Arm (14, 43) einen gebogenen Rückhaltefinger (140) aufweist, um die Schraube (2) in parallel zu einer Längsrichtung der Gehäuseschiene (30) zu halten.

11. Dichtungsvorrichtung nach einem der Ansprüche 1 bis 10, wobei das Rückhaltemittel ein Einsatzelement (4) ist, welches in der Durchgangsöffnung (12) fixierbar ist.

12. Dichtungsvorrichtung nach einem der Ansprüche 1 bis 11, wobei zusätzlich zum Rückhaltemittel ein Klebstofftropfen vorhanden ist, welcher die Schraube (2) in ihrer vormontierten Position fixiert.

13. Dichtungsvorrichtung nach einem der Ansprüche 1 bis 11, wobei das Rückhaltemittel (4, 141) auf die Schraube (2) oder auf die Platte (10) aufgespritzt ist.

14. Dichtungsvorrichtung nach Anspruch 1, wobei der Haltewinkel (1) und das Rückhaltemittel (4, 141) aus Kunststoff gefertigt sind und der Haltewinkel (1) und das Rückhaltemittel (4) gemeinsam einstückig ausgebildet sind.

15. Dichtungsvorrichtung nach Anspruch 14, wobei der Haltewinkel (1) auf die Schraube (2) aufgespritzt ist.

16. Dichtungsvorrichtung nach einem der Ansprüche 1 bis 15, wobei die Gehäuseschiene (30) einen u-förmigen Querschnitt mit zwei Seitenwänden und einem die zwei Seitenwände miteinander verbindenden oberen Steg aufweist und wobei die Platte (10) in einem Winkel von 90° oder grösser zum Steg verläuft.

17. Dichtungsvorrichtung nach einem der Ansprüche 1 bis 15, wobei die Gehäuseschiene (30) einen u-förmigen Querschnitt mit zwei Seitenwänden und einem die zwei Seitenwände miteinander verbindenden oberen Steg aufweist und wobei das Befestigungsmittel ein Haltewinkel (1) mit einem ersten und einem zweiten Schenkel (10, 11) ist, wobei der erste Schenkel (10) die Platte mit der Durchgangsöffnung (12) bildet und der zweite Schenkel (11) unterhalb des Stegs in die Gehäuseschiene (30) einschiebbar ist.

18. Dichtungsvorrichtung nach Anspruch 17, wobei der erste Schenkel (10) im unmontierten Zustand des Haltewinkels in einem Winkel von 90° oder grösser zum zweiten Schenkel (11) verläuft.

19. Dichtungsvorrichtung nach einem der Ansprüche 17 oder 18, wobei am zweiten Schenkel (11) mindestens ein Rückhalteelement (101, 102, 103, 104) zur Halterung des Haltewinkels (1) in der Gehäuseschiene (30) vorhanden ist.

20. Dichtungsvorrichtung nach Anspruch 19, wobei dieses mindestens eine Rückhalteelement (101, 102, 103, 104) eine Erhebung und/oder eine Vertiefung und/oder eine Verbreiterung des zweiten Schenkels (11) ist.

21. Befestigungsmittel einer Dichtungsvorrichtung gemäss einem der Ansprüche 1 bis 20, wobei das Befestigungsmittel ein Haltewinkel (1) mit einem ersten und einem zweiten Schenkel (10, 11) ist, wobei der erste Schenkel (10) eine Platte zur Auflage an einer Stirnfläche eines Tür- oder Fensterflügels (T) bildet und eine Durchgangsöffnung (12) für eine Schraube (2) aufweist, **dadurch gekennzeichnet, dass** in der Durchgangsöffnung (12) ein Rückhaltemittel (14, 43, 141) zum Halten der Schraube (2) vorhanden ist.

22. Befestigungsmittel nach Anspruch 21, wobei das Rückhaltemittel mindestens einen Arm (14, 43) aufweist, welcher in der Durchgangsöffnung (12) angeordnet ist.

23. Befestigungsmittel nach Anspruch 21, wobei das Rückhaltemittel (4, 141) aus Kunststoff besteht und auf den Haltewinkel (1) aufgespritzt ist.

24. Befestigungsmittel nach Anspruch 21, wobei der Haltewinkel (1) und das Rückhaltemittel (4, 141) gemeinsam einstückig aus Kunststoff gebildet sind.

## Claims

1. A sealing device for a door or a window, wherein the sealing device has a housing rail (30) and a sealing strip (31, 32), which is retained in the housing rail (30), and wherein the seal also has at least one fastening means (1) for fastening the housing rail (30) on a door leaf or window casement (T), wherein the fastening means (1) comprises a plate (10) for resting on an end surface of the door leaf or window casement (T) and also comprises a through-opening (12) for a screw (2), said through-opening being arranged in the plate (10), **characterized in that** a restraining means (14, 43, 141) for retaining the screw (2) is present in the through-opening (12).

2. The sealing device as claimed in claim 1, wherein the restraining means has at least one arm (14, 43) for retaining the screw (2), wherein the arm (14, 43) is arranged in the through-opening (12).

3. The sealing device as claimed in claim 2, wherein at least three arms (14, 43) are present, said arms being arranged in the through-opening (12) in a manner distributed over the circumference of the same.

4. The sealing device as claimed in claim 3, wherein the at least three arms (14, 43) are directed radially toward a center point of the through-opening (12).

5. The sealing device as claimed in one of claims 2 to 4, wherein the at least one arm (14, 43) runs in a plane defined by the through-opening (12).

6. The sealing device as claimed in one of claims 2 to 5, wherein the at least one arm (14, 43) is of bendable design such that it can be bent out of the through-opening (12) when the screw (2) is being screwed in.

7. The sealing device as claimed in one of claims 2 to 6, wherein precisely four arms (14) are present.

8. The sealing device as claimed in one of claims 2 to 7, wherein more than one arm (14) is present, and wherein the arms (14) are oriented such that, in the pre-fitted state of the screw (2), they engage in turns (23) of a thread of the screw (2) in an offset manner along the course of said thread.

9. The sealing device as claimed in one of claims 2 to 8, wherein at least one arm (14, 43) has a bent restraining finger (140) in order to retain the screw (2) at an angle other than 90° in relation to the plate (10).

10. The sealing device as claimed in one of claims 2 to 8, wherein at least one arm (14, 43) has a bent restraining finger (140) in order to retain the screw (2) in parallel to a longitudinal direction of the housing rail (30).

11. The sealing device as claimed in one of claims 1 to 10, wherein the restraining means is an insert element (4) which can be fixed in the through-opening (12).

12. The sealing device as claimed in one of claims 1 to 11, wherein a droplet of adhesive is present in addition to the restraining means, said droplet of adhesive fixing the screw (2) in its pre-fitted position.

13. The sealing device as claimed in one of claims 1 to 11, wherein the restraining means (4, 141) is applied to the screw (2) or to the plate (10) by injection molding.

14. The sealing device as claimed in claim 1, wherein the angled retaining bracket (1) and the restraining means (4, 141) are produced from plastics material and the angled retaining bracket (1) and the restraining means (4) are formed together in one piece.

15. The sealing device as claimed in claim 14, wherein the angled retaining bracket (1) is applied to the screw (2) by injection molding.

16. The sealing device as claimed in one of claims 1 to 15, wherein the housing rail (30) has a u-shaped cross section with two side walls and an upper crosspiece, which connects the two side walls to one another, and wherein the plate (10) runs at an angle of 90° or greater in relation to the crosspiece.

17. The sealing device as claimed in one of claims 1 to 15, wherein the housing rail (30) has a u-shaped cross section with two side walls and an upper crosspiece, which connects the two side walls to one another, and wherein the fastening means is an angled retaining bracket (1) with a first and a second limb (10, 11), wherein the first limb (10) forms the plate with the through-opening (12) and the second limb (11) can be pushed into the housing rail (30) beneath the crosspiece.

18. The sealing device as claimed in claim 17, wherein the first limb (10), in the non-fitted state of the angled retaining bracket, runs at an angle of 90° or greater in relation to the second limb (11).

19. The sealing device as claimed in either of claims 17 and 18, wherein at least one restraining element (101, 102, 103, 104) for retaining the angled retaining bracket (1) in the housing rail (30) is present on the second limb (11).

20. The sealing device as claimed in claim 19, wherein said at least one restraining element (101, 102, 103, 104) is an elevation and/or a depression and/or is a widened portion of the second limb (11).

21. A fastening means of a sealing device as claimed in one of claims 1 to 20, wherein the fastening means is an angled retaining bracket (1) with a first and a second limb (10, 11), wherein the first limb (10) forms a plate for resting on an end surface of a door leaf or window casement (T) and has a through-opening (12) for a screw (2), **characterized in that** a restraining means (14, 43, 141) for retaining the screw (2) is present in the through-opening (12).

22. The sealing device as claimed in claim 21, wherein the restraining means has at least one arm (14, 43), which is arranged in the through-opening (12) .

23. The fastening means as claimed in claim 21, wherein the restraining means (4, 141) consists of plastics material and is applied to the angled retaining bracket (1) by injection molding.

24. The sealing device as claimed in claim 21, wherein the angled retaining bracket (1) and the restraining means (4, 141) are formed together in one piece from plastics material.

## Revendications

1. Dispositif d'étanchéité pour une porte ou une fenêtre, le dispositif d'étanchéité possédant un rail de boîtier (30) et une baguette d'étanchéité (31, 32) maintenue dans le rail de boîtier (30) et la garniture d'étanchéité possédant en outre au moins un moyen de fixation (1) servant à la fixation du rail de boîtier (30) à un battant de porte ou de fenêtre (T) de la porte ou de la fenêtre, le moyen de fixation (1) comportant une plaque (10) destinée à être appliquée contre une surface frontale du battant de porte ou de fenêtre (T) et une ouverture de passage (12) pour une vis (2), associée à la plaque (10), **caractérisé en ce qu'**un moyen de retenue (14, 43, 141) destiné à maintenir la vis (2) se trouve dans l'ouverture de passage (12).

2. Dispositif d'étanchéité selon la revendication 1, le moyen de retenue possédant au moins un bras (14, 43) destiné au maintien de la vis (2), le bras (14, 43) étant disposé dans l'ouverture de passage (12).

3. Dispositif d'étanchéité selon la revendication 2, au moins trois bras (14, 43) étant présents, lesquels sont disposés dans l'ouverture de passage (12) en étant distribués sur le pourtour de celle-ci.

4. Dispositif d'étanchéité selon la revendication 3, les au moins trois bras (14, 43) étant orientés dans le sens radial par rapport à un point central de l'ouverture de passage (12).

5. Dispositif d'étanchéité selon l'une des revendications 2 à 4, l'au moins un bras (14, 43) s'étendant dans un plan défini par l'ouverture de passage (12).

6. Dispositif d'étanchéité selon l'une des revendications 2 à 5, l'au moins un bras (14, 43) étant configuré flexible de sorte qu'il se laisse fléchir hors de l'ouverture de passage (12) lors du serrage de la vis (2).

7. Dispositif d'étanchéité selon l'une des revendications 2 à 6, exactement quatre bras (14) étant présents.

8. Dispositif d'étanchéité selon l'une des revendications 2 à 7, plus d'un bras (14) étant présent et les bras (14) étant orientés de telle sorte que dans l'état prémonté de la vis (2), ils viennent en prise dans les filets (23) d'un filetage de la vis (2) avec décalage le long du filetage.

9. Dispositif d'étanchéité selon l'une des revendications 2 à 8, au moins un bras (14, 43) possédant une languette de retenue (140) cintrée pour maintenir la vis (2) dans un angle différent de 90° par rapport à la plaque (10).

10. Dispositif d'étanchéité selon l'une des revendications 2 à 8, au moins un bras (14, 43) possédant une languette de retenue (140) cintrée pour maintenir la vis (2) parallèlement à une direction longitudinale du rail de boîtier (30).

11. Dispositif d'étanchéité selon l'une des revendications 1 à 10, le moyen de retenue étant un élément d'insertion (4) qui peut être fixé dans l'ouverture de passage (12).

12. Dispositif d'étanchéité selon l'une des revendications 1 à 11, un point de colle qui fixe la vis (2) dans sa position prémontée étant présent en plus du moyen de retenue.

13. Dispositif d'étanchéité selon l'une des revendications 1 à 11, le moyen de retenue (4, 141) étant appliqué par projection sur la vis (2) ou sur la plaque (10).

14. Dispositif d'étanchéité selon la revendication 1, l'équerre de maintien (1) et le moyen de retenue (4, 141) étant fabriqués en matière plastique et l'équerre de maintien (1) et le moyen de retenue (4) étant formés ensemble d'un seul tenant.

15. Dispositif d'étanchéité selon la revendication 14, l'équerre de maintien (1) étant appliquée par projection sur la vis (2).

16. Dispositif d'étanchéité selon l'une des revendications 1 à 15, le rail de boîtier (30) possédant une section transversale en forme de U avec deux parois latérales et un élément jointif supérieur qui relie entre elles les deux parois latérales et la plaque (10) s'étendant selon un angle égal ou supérieur à 90° par rapport à l'élément jointif.

17. Dispositif d'étanchéité selon l'une des revendications 1 à 15, le rail de boîtier (30) possédant une section transversale en forme de U avec deux parois latérales et un élément jointif supérieur qui relie entre elles les deux parois latérales et le moyen de fixation étant une équerre de maintien (1) ayant une première et une deuxième branche (10, 11), la première branche (10) formant la plaque munie de l'ouverture de passage (12) et la deuxième branche (11) pouvant être insérée dans le rail de boîtier (30) au-dessous de l'élément jointif.

18. Dispositif d'étanchéité selon la revendication 17, la première branche (10), à l'état non monté de l'équerre de maintien, s'étendant sous un angle égal ou supérieur à 90° par rapport à la deuxième branche (11).

19. Dispositif d'étanchéité selon l'une des revendications 17 ou 18, au moins un élément de retenue (101, 102, 103, 104) servant au maintien de l'équerre de maintien (1) dans le rail de boîtier (30) étant présent sur la deuxième branche (11).

20. Dispositif d'étanchéité selon la revendication 19, cet au moins un élément de retenue (101, 102, 103, 104) étant un bossage et/ou une cavité et/ou un élargissement de la deuxième branche (11).

21. Moyen de fixation d'un dispositif d'étanchéité selon l'une des revendications 1 à 20, le moyen de fixation étant une équerre de maintien (1) ayant une première et une deuxième branche (10, 11), la première branche (10) possédant une plaque destinée à être appliquée contre une surface frontale d'un battant de porte ou de fenêtre (T) et une ouverture de passage (12) pour une vis (2), **caractérisé en ce qu'**un moyen de retenue (14, 43, 141) destiné à maintenir la vis (2) se trouve dans l'ouverture de passage (12).

22. Moyen de fixation selon la revendication 21, le moyen de retenue possédant au moins un bras (14, 43) qui est disposé dans l'ouverture de passage (12).

23. Moyen de fixation selon la revendication 21, le moyen de retenue (4, 141) étant constitué de matière plastique et étant appliqué par projection sur l'équerre de maintien (1).

24. Moyen de fixation selon la revendication 21, l'équerre de maintien (1) et le moyen de retenue (4, 141) étant formés ensemble d'une seule pièce en matière plastique.
